# EUROPÄISCHE PATENTANMELDUNG

(11) **EP 1 712 700 A2**
(43) Veröffentlichungstag der Anmeldung: **18.10.2006**
(21) Anmeldenummer: 06450046.5
(22) Anmeldetag: 30.03.2006
(51) Int. Cl.: E04F 13/06

(54) **Einputzleiste sowie Verfahren zur Herstellung einer Einputzleiste**

(30) Priorität: 05.04.2005 AT 5802005
(71) Anmelder: Kassmannhuber, Peter, 9701 Rothenthurn (AT); Mick, Stefan, Mag., 9545 Radenthein (AT)
(72) Erfinder: Kassmannhuber, Peter, 9701 Rothenthurn (AT); Mick, Stefan, Mag., 9545 Radenthein (AT)
(74) Vertreter: Babeluk, Michael

(57) **Zusammenfassung**

Die Erfindung betrifft Verfahren zur Herstellung einer Einputzleiste aus Kunststoff mit einem daran befestigten Armierungsgewebe. Die Erfindung ist dadurch gekennzeichnet,
a) dass eine Einputzleiste (1) mit einer Auflagefläche für das Armierungsgewebe (2) bereitgestellt oder hergestellt wird,
b) dass die Auflagefläche in einem Bereich, in dem das Armierungsgewebe befestigt wird, erhitzt und zumindest an deren Oberfläche in einen plastischen Zustand versetzt wird,
c) dass ein Haltebereich des Armierungsgewebes auf die Auflagefläche aufgebracht wird, sowie
d) dass zumindest ein Haltestreifen (4) aus erhitztem Kunststoff auf den Haltebereich des Armierungsgewebes auggebracht, vorzugsweise aufextrudiert, wird.

## Beschreibung

Die Erfindung betrifft ein Verfahren zur Herstellung einer Einputzleiste aus Kunststoff mit einem daran befestigten Armierungsgewebe sowie eine mit dem erfindungsgemäßen Verfahren hergestellte Einputzleiste.

Einputzleisten, wie beispielsweise Laibungsanschlussprofile oder Sockelprofile, dienen dazu einen optisch ansprechenden, möglichst rissfreien Anschluss einer Putzfläche an Einbauteile wie Fenster und Türen herzustellen bzw. im Sockelbereich einen sauberen Abschluss auszubilden. Weiters werden derartige Leisten zur Verstärkung von Mauerkanten verwendet. Zur Verankerung der Einputzleisten sind Armierungsgewebe bzw. Armierungsgitter vorgesehen, die an der Einputzleiste befestigt sind und in einer Spachtelmasse bzw. eine Edelputzschicht eingebettet werden.

Um das netzartige Armierungsgewebe an einer Einputzleiste zu befestigen, kann dieses beispielsweise mit dem Grundkörper verklebt werden oder zwischen dem Grundkörper der Einputzleiste und einer Klemmleiste eingeklemmt sein. Die erstgenannte Möglichkeit führt zu einer Befestigung mit nicht immer befriedigender Festigkeit, wobei zusätzliche, nicht einfach zu handhabende Arbeitsschritte für das Aufbringen des Klebers, der Fixierung des Gewebes und der Wartezeit bis zum Abbinden des Klebers notwendig sind. Die Variante mit der Klemmleiste ist in der Herstellung der Einputzleiste aufwändiger, wobei zusätzliche Arbeitsschritte zum Einklemmen des Armierungsgitters notwendig sind.

In diesem Zusammenhang ist beispielsweise aus der EP 0 875 641 B1 eine Putzleiste mit daran befestigtem Armierungsmaterial bekannt geworden, bei welcher das Armierungsgitter mittels Ultraschall-Schweißverfahren auf der Putzleiste befestigt wird. Dabei wird die Putzleiste auf einer Schweißunterlage angeordnet, ein Randbereich des Armierungsgewebes auf der Putzleiste angeordnet und darauf ein Kunststoffstrang abgelegt. Dann wird eine Schweißsonotrode mit ihrer waagrechten Unterseite auf die beschriebene Materialanordnung abgesenkt und die Ultraschallerzeugung aktiviert. Unter der Wirkung der Ultraschallwellen schmilzt das Material bevorzugt an dessen Kontaktstellen, wobei sich die Materialien der Putzleiste und des Kunststoffstranges vereinigen und ein Halt durch die Netzöffnungen des Armierungsgewebes hindurch entsteht.

Aus der EP 0 915 215 A2 ist ein Kantenschutz-Richtwinkel bekannt, bei welchem das Armierungsgitter über den Eckbereich des Winkelprofil-Grundkörpers geführt und durch Anextrudieren einer Abzugleiste am Winkelprofil-Grundkörper befestigt wird. Zur weiteren Befestigung werden zwei Verankerungsstreifen an den beiden Schenkeln des Grundkörpers anextrudiert. Die Herstellung des Kantenschutz-Richtwinkels wird dadurch rationalisiert, da das Anextrudieren der Abzugleiste an den Grundkörper - nachdem dieser mit dem vorgekanteten Armierungsgewebe belegt ist - zeitlich präzise auf das Extrudieren des Grundkörpers abgestimmt und daher im Gleichtakt mit dem Extrudieren des Winkelprofil-Grundkörpers erfolgen kann. Eine derartige Co-Extrusion ist allerdings bei komplizierter aufgebauten Einputzleisten nicht immer möglich, da durch die Co-Extrusion auf den noch weichen Grundkörper Verspannungen und Deformationen auftreten können.

Aus der EP 1 281 822 A1 ist eine Profilleiste aus extrudiertem Kunststoff mit einem daran befestigten netzartigen Gittergewebestreifen bekannt, bei welcher der Gittergewebestreifen zwischen mindestens zwei beim Extrudieren vorgeformten und im plastischen Zustand aneinander gepressten Teilen der Profilleiste gehalten ist. Das Extrusionswerkzeug zur Herstellung der Profilleiste weist einen horizontal verlaufenden Kanal für die aus einem ersten Extruder zugeführte Kunststoffmasse auf, die die herzustellende Profilleiste bildet. Oberhalb des horizontal verlaufenden Kanals wird ein Gittergewebestreifen zugeführt und mit einem Führungsschlitz umgelenkt, der zu einem Werkzeugaustritt hin geringfügig oberhalb des horizontalen Kanals verläuft. Ein zweiter Extruder liefert über ein Zusatzextrusionswerkzeug erhitzte Kunststoffmasse an die Oberseite des am Werkzeugaustritt austretenden Gittergewebestreifens. Der sich drucklos auflegende, zumindest teilplastische Streifen wird in der sich anschließenden Kalibriereinrichtung an die noch teilplastische, unterhalb liegende Profilleiste angepresst und mit dieser verbunden, so dass der Gittergewebestreifen von der Einheit aus Profilleiste und dem Streifen festgehalten ist. Schließlich wird die fertiggestellte Profilleiste abgekühlt. Es handelt sich dabei um ein Co-Extrusions-Verfahren, bei welchem die bereits oben beschriebenen Probleme auftreten, da eine vom Extrusionsvorgang an der Oberfläche noch teilplastische Profilleiste - bedingt durch den Abkühlungsprozess - an der Oberfläche niedrigere Temperaturen aufweist, als im Inneren des Profilquerschnittes, so dass die gesamte Profilleiste relativ weich und somit nicht formbeständig ist.

Auch aus der EP 1 514 978 A2 ist ein Co-Extrusions-Verfahren bekannt, bei welchem ein Profil beiderseits auf eine Gewebeschicht aufextrudiert wird. Das bedeutet, dass eine erste Materialschicht durch eine erste Materialzuführung von oben und eine zweite Materialschicht durch eine Materialzuführung von unten im Kantenbereich eines Gewebewinkels zugeführt wird. Die Materialschichten werden jeweils im plastifizierten Zustand unter Druck zugeführt, so dass sie die Maschen der Materialschicht durchdringen und dadurch deren Fasern vollständig umschließen.

Ähnlich Probleme treten bei dem aus der EP 1 046 488 A2 bekannten Verfahren zum Herstellen von Kunststoffprofilen mit Armierungsgewebe auf, bei welchem das Kunststoffprofil durch Extrudieren hergestellt und beim Extrudieren wenigstens ein Randstreifen eines langgestreckten Gittergewebes in das noch plastifizierte Kunststoffmaterial eingebettet wird. Dabei durchdringt das plastifizierte Kunststoffmaterial die Gittergewebemaschen und umschließt diese.

Der Erfindung liegt die Aufgabe zu Grunde, eine Einputzleiste der eingangs beschriebenen Art vorzuschlagen, die sich einfach herstellen lässt und bei der das Armierungsgitter mit befriedigender Festigkeit fixiert ist. Weiters soll ein einfaches und kostengünstiges Verfahren zur Herstellung derartiger Einputzleisten geschaffen werden.

Diese Aufgabe wird erfindungsgemäß dadurch gelöst,
a) dass eine Einputzleiste mit einer Auflagefläche für das Armierungsgewebe bereitgestellt oder hergestellt wird,
b) dass die Auflagefläche in einem Bereich, in dem das Armierungsgewebe befestigt wird, erhitzt und an deren Oberfläche in einen plastischen Zustand versetzt wird,
c) dass ein Haltebereich des Armierungsgewebes auf die Auflagefläche aufgebracht wird, sowie
d) dass zumindest ein Haltestreifen aus erhitztem Kunststoff auf den Haltebereich des Armierungsgewebes aufgebracht, vorzugsweise aufextrudiert, wird.

Bei der Erfindung wird somit der Haltestreifen auf einen erhitzten Bereich einer ansonsten relativ kühlen, formstabilen Einputzleiste unter Zwischenlage des Armierungsgewebes aufgebracht bzw. aufextrudiert, wobei nur die Oberfläche einer Auflagefläche der Einputzleiste in einen plastischen Zustand versetzt wird, so dass das übrige Profil formstabil bleibt. Dabei ist es sowohl möglich, die Einputzleiste zuzukaufen oder in einem separaten Extrusionsvorgang zu erzeugen. Weiters kann die Einputzleiste auch im gleichen Arbeitsgang extrudiert werden, muss jedoch vor dem Aufbringen des Armierungsgewebes kalibriert und derart abgekühlt werden, dass sie formstabil ist.

Um eine besonders gute Verbindung des bzw. der Haltestreifen mit der Einputzleiste zu gewährleisten, ist dafür zu sorgen, dass die Haltestreifen durch das Armierungsgewebe in den plastischen Bereich der Auflagefläche durchgreifen.

Weiters ist es von Vorteil, wenn die auf den Haltebereich aufgebrachten oder aufextrudierten Haltestreifen mit der Einputzleiste verpresst werden.

Bevorzugt kann der Auflagebereich der Einputzleiste derart erhitz werden, dass die Oberfläche aufschmilzt, wobei Heißluftdüsen oder Infrarotstrahlung als Heizquellen eingesetzt werden können.

Die erfindungsgemäße Einputzleiste mit einem an einer Auflagefläche befestigten Armierungsgewebe zeichnet sich dadurch aus, dass zumindest ein Haltestreifen aus Kunststoff unter Einschluss des Armierungsgewebes auf einen nachträglich erhitzten, plastischen Oberflächenbereich der Auflagefläche aufgebracht bzw. aufextrudiert ist.

Eine besonders haltbare Verbindung zwischen Einputzleiste und Haltestreifen wird dann erreicht, wenn die Einputzleiste und der Haltestreifen aus demselben Kunststoffmaterial bestehen.

Die Erfindung wird im Folgenden anhand von Beispielen näher erläutert. Es zeigen:
- Fig. 1: in schematischer Darstellung eine Vorrichtung zur Herstellung einer erfindungsgemäßen Einputzleiste;
- Fig. 2: eine erfindungsgemäße Einputzleiste mit daran befestigtem Armierungsgewebe in einer dreidimensionalen Darstellung; sowie
- Fig. 3: eine Schnittdarstellung der Einputzleiste entlang eines Haltestreifens in einer vergrößerten Darstellung.

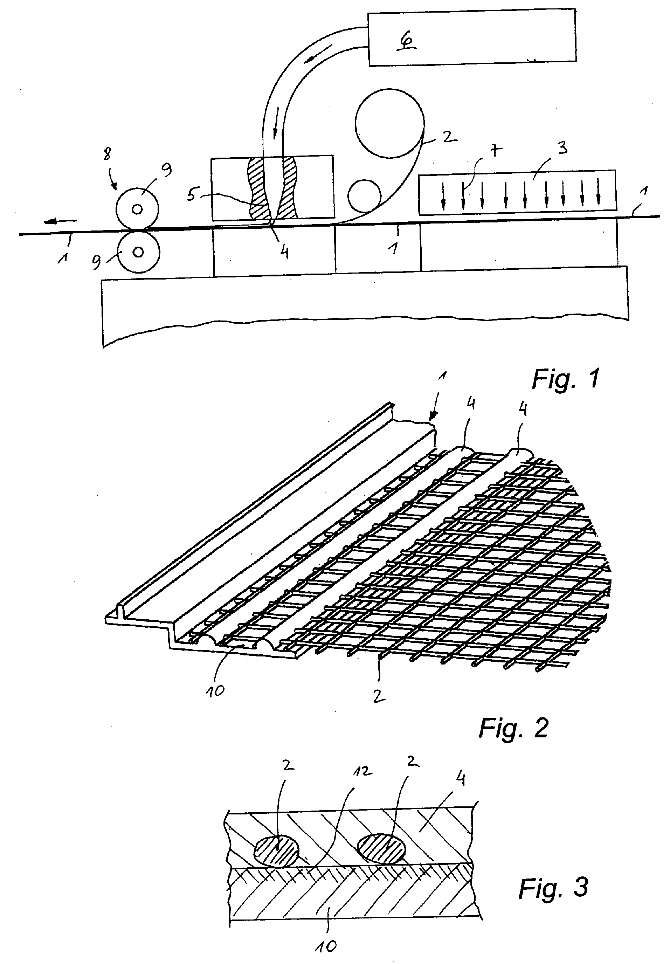

Mit der in Fig. 1 schematisch dargestellten Vorrichtung wird eine Einputzleiste 1 mit einem Armierungsgitter bzw. einem Armierungsgewebe verbunden. Dabei wird zunächst in einer Heizstation 3 ein Haltebereich der Einputzleiste 1 oberflächlich erhitzt, wobei ein Heißluftgebläse 7 oder Infrarotstrahlung verwendet werden können. Danach wird das Armierungsgewebe 2 zugeführte, mit dessen Haltebereich (z.B. Randbereich) auf den Auflagebereich der Einputzleiste 1 aufgebracht und mit einem Haltestreifen 4 aus einer Kunststoffschmelze, die aus einer Extrusionsdüse 5 austritt, bedeckt. Die Extrusionsdüse 5 ist mit einer Vorrichtung 6 zur Herstellung der Kunststoffschmelze verbunden. Es ist auch möglich, als Haltestreifen 4 ein erhitztes Kunststoffband auf das Armierungsgewebe aufzubringen.

In Bewegungsrichtung nach der Extrusionsdüse 5 ist eine Abzugsvorrichtung 8 angeordnet, deren Rollen 9 dazu verwendet werden, die aufextrudierten bzw. als erhitztes Kunststoffband aufgebrachten Haltestreifen 4 mit der Einputzleiste 1 zu verpressen. Nach der Abzugseinrichtung 8 wird die Einputzleiste samt Armierungsgewebe 2 kalibriert und abgekühlt.

Die in den Fig. 2 und Fig. 3 dargestellte Einputzleiste 1 aus Kunststoff weist eine Auflagefläche 10 für das Armierungsgewebe 2 auf, wobei zwei parallele Haltestreifen 4 aus Kunststoff unter Einschluss des Armierungsgewebes 2 auf den nachträglich erhitzten, plastischen Oberflächenbereich 12 der Auflagefläche 10 aufgebracht, vorzugsweise aufextrudiert, sind. Bevorzugt bestehen die Einputzleiste 1 und die Haltestreifen 4 aus dem selben Kunststoffmaterial.

## Patentansprüche

1. Verfahren zur Herstellung einer Einputzleiste aus Kunststoff mit einem daran befestigten Armierungsgewebe, **dadurch gekennzeichnet**,
a) dass eine Einputzleiste mit einer Auflagefläche für das Armierungsgewebe bereitgestellt oder hergestellt wird,
b) dass die Auflagefläche in einem Bereich, in dem das Armierungsgewebe befestigt wird, erhitzt und an deren Oberfläche in einen plastischen Zustand versetzt wird,
c) dass ein Haltebereich des Armierungsgewebes auf die Auflagefläche aufgebracht wird, sowie
d) dass zumindest ein Haltestreifen aus erhitztem Kunststoff auf den Haltebereich des Armierungsgewebes aufgebracht, vorzugsweise aufextrudiert, wird.

2. Verfahren nach Anspruch 1, **dadurch gekennzeichnet, dass** der zumindest eine Haltestreifen durch das Armierungsgewebe in den plastischen Bereich der Auflagefläche durchgreift.

3. Verfahren nach Anspruch 1 oder 2, **dadurch gekennzeichnet, dass** der auf den Haltebereich aufgebrachte oder aufextrudierte Haltestreifen mit der Einputzleiste verpresst wird.

4. Verfahren nach einem der Ansprüche 1 bis 3, **dadurch gekennzeichnet, dass** der Auflagebereich der Einputzleiste derart erhitz wird, dass die Oberfläche aufschmilzt.

5. Verfahren nach einem der Ansprüche 1 bis 4, **dadurch gekennzeichnet, dass** der Auflagebereich durch Heißluft oder durch Infrarotstrahlung erhitzt wird.

6. Verfahren nach einem der Ansprüche 1 bis 5, **dadurch gekennzeichnet, dass** die Einputzleiste nach der Befestigung des Armierungsgewebes kalibriert und abgekühlt wird.

7. Verfahren nach einem der Ansprüche 1 bis 6, **dadurch gekennzeichnet, dass** für die Einputzleiste oder zumindest für deren Auflagefläche und für den zumindest einen Haltestreifen das selbe Kunststoffmaterial verwendet wird.

8. Verfahren nach einem der Ansprüche 1 bis 7, **dadurch gekennzeichnet, dass** die Einputzleiste gemäß Schritt a) im gleichen Arbeitsgang extrudiert, kalibriert und derart abgekühlt wird, dass sie formstabil ist.

9. Einputzleiste (1) aus Kunststoff mit einem daran befestigten Armierungsgewebe (2), wobei die Einputzleiste (1) eine Auflagefläche (10) für das Armierungsgewebe (2) aufweist, **dadurch gekennzeichnet, dass** zumindest ein Haltestreifen (4) aus Kunststoff unter Einschluss des Armierungsgewebes (2) auf einen nachträglich erhitzten, plastischen Oberflächenbereich (12) der Auflagefläche (10) aufgebracht, vorzugsweise aufextrudiert, ist.

10. Einputzleiste (1) nach Anspruch 9 **dadurch gekennzeichnet, dass** die Einputzleiste (1) und der zumindest eine Haltestreifen (4) aus dem selben Kunststoffmaterial bestehen.
